# FASCICULE DE BREVET EUROPEEN

(11) **EP 1 997 979 B1**
(45) Date de publication et mention de la délivrance du brevet: **28.07.2010**
(21) Numéro de dépôt: 08156132.6
(22) Date de dépôt: 14.05.2008
(51) Int. Cl.: E04H 15/64, F16B 5/06

(54) **Pièce de liaison d'un sous-ensemble, notamment d'un panneau souple, à un panneau souple comprenant un bourrelet de bordure**
Verbindungselement einer Untereinheit, insbesondere eines flexiblen Paneels mit einem anderen flexiblen Paneel, das eine Randwulst umfasst
Part for linking a sub-assembly, in particular a flexible panel, to a flexible panel comprising an edge bead

(30) Priorité: 30.05.2007 FR 0703810
(43) Date de publication de la demande: 03.12.2008
(73) Titulaire: Robba, Carlo, 69720 St. Laurent de Mûre (FR)
(72) Inventeur: Robba, Carlo, 69720 St. Laurent de Mûre (FR)
(74) Mandataire: Jeannet, Olivier

(56) Documents cités:
- CA-A1- 2 472 836
- DE-A1- 4 026 604
- GB-A- 2 113 637
- US-B1- 6 991 403

## Description

La présente invention concerne une pièce de liaison d'un sous-ensemble, notamment d'un panneau souple, à un panneau souple comprenant un bourrelet de bordure.

Il est nécessaire dans certaines applications de relier un panneau souple à un autre panneau souple comprenant un bourrelet de bordure. Tel est en particulier le cas dans le domaine des abris provisoires tels que les tentes ou les stands. Il est en effet connu de prévoir, au niveau du bord inférieur du toit d'une tente, des panneaux souples de jonction, solidaires de ce toit, auxquels des panneaux souples constituant les parois de la tente doivent être reliés. Pour cette liaison, les bords libres des panneaux de jonction sont équipés de bourrelets de bordure, couramment dénommés "joncs", et les panneaux formant les parois de la tente comprennent des attaches en forme de "C" ouvert, destinées à être engagées à coulissement sur lesdits bourrelets de bordure, à partir d'une extrémité des panneaux de jonction. Les demandes de brevet français N° 2 753 473 et allemand N° DE 40 26 604 illustrent un tel système d'assemblage.

Les systèmes d'assemblage connus ont pour inconvénient de ne pas être très pratiques d'utilisation et mettent en oeuvre seulement des pièces d'assemblages rigides, obligeant à engager l'ensemble du bord supérieur d'un panneau de paroi depuis l'extrémité d'un panneau de jonction. Les bords verticaux des panneaux de paroi, qui comprennent des bourrelets de bordure, doivent ensuite être engagés dans des gorges que comprennent des poteaux profilés situés aux angles du toit de la tente, par le haut de ces gorges, ce qui n'est pas non plus une opération très facile à réaliser.

La présente invention vise à remédier à ces inconvénients.

À cet effet, la pièce de liaison qu'elle concerne comprend :
- une pièce d'assemblage comprenant une partie propre, dans une position, à être engagée sur le bourrelet de bordure, et dans une autre position, à être refermée sur ce bourrelet de bordure afin de retenir ce dernier en elle ;
- une pièce d'actionnement, reliée à la pièce d'assemblage et mobile par rapport à celle-ci entre une position de déverrouillage, dans laquelle la pièce d'assemblage est dans ladite première position, et une position de verrouillage, dans laquelle la pièce d'assemblage est dans ladite deuxième position ;
- des moyens permettant de faire passer ladite pièce d'assemblage de ladite première position à ladite deuxième position lors du déplacement de la pièce d'actionnement de ladite position de déverrouillage à ladite position de verrouillage, et inversement ; et
- des moyens de maintien de la pièce d'actionnement en position de verrouillage.

Ainsi, en position de déverrouillage de la pièce d'actionnement, la pièce d'assemblage peut être engagée sur ledit bourrelet de bordure, puis la pièce d'actionnement peut être amenée en position de verrouillage par action manuelle afin de réaliser la liaison de la pièce de liaison au sous-ensemble comprenant ce bourrelet de bordure. Par conséquent, l'assemblage d'un sous-ensemble, notamment d'un panneau souple, à ce sous-ensemble comprenant ce bourrelet, peut être réalisé en tout point de la longueur ce sous-ensemble, de manière facile et rapide, et sans nécessité d'aménager une ou plusieurs zones d'entrée.

Dans une application à une tente, l'invention permet de faciliter de manière déterminante le montage ou le démontage de la tente : en effet, les bourrelets de bordure que comprennent les bords latéraux (verticaux) d'un panneau de paroi peuvent être engagés dans les gorges des poteaux profilés par le bas de ces poteaux, puis le bord supérieur de ce panneau de bordure peut être relié au panneau de jonction par engagement et verrouillage des pièces de liaison selon l'invention, équipant ce bord supérieur.

Selon une forme de réalisation préférée de l'invention,
- la pièce d'assemblage comprend une partie en forme de U, qui inclut deux branches mobiles entre une position d'écartement, dans laquelle le bourrelet de bordure peut être engagé entre ces branches, ce qui correspond à ladite première position, et une position de rapprochement, dans laquelle ces branches retiennent ledit bourrelet de bordure entre elles, ce qui correspond à ladite deuxième position ;
- la pièce de liaison comprend au moins un bossage en forme de rampe, solidaire de la pièce d'assemblage ou de la pièce d'actionnement, venant, lors du déplacement de la pièce d'actionnement par rapport à la pièce d'assemblage, coopérer avec l'autre pièce de manière à réaliser le mouvement desdites branches entre la position d'écartement et la position de rapprochement.

De préférence, la pièce d'actionnement est mobile par rapport à la pièce d'assemblage selon une direction perpendiculaire à la direction d'engagement de la pièce d'assemblage sur le bourrelet de bordure.

La manipulation de la pièce de liaison selon l'invention est facile, cette pièce de liaison étant engagée sur le bourrelet de bordure selon une direction perpendiculaire à ce bourrelet, et la pièce d'actionnement étant amenée en position de verrouillage par un mouvement de coulissement parallèle au bourrelet.

De préférence, la pièce d'actionnement présente une forme générale en U et comprend, au niveau des extrémités libres de ses parois latérales, des rebords recourbés vers l'intérieur, cette pièce d'actionnement recevant en elle la partie de la pièce d'assemblage formant lesdites branches et retenant cette partie en elle par encliquetage de ces branches derrière lesdits rebords.

L'assemblage de la pièce est ainsi particulièrement facile à réaliser, la pièce d'assemblage étant engagée dans la pièce d'actionnement jusqu'à encliquetage des branches de cette pièce d'assemblage derrière les rebords de la pièce d'actionnement.

Lesdits moyens de maintien de la pièce d'actionnement en position de verrouillage peuvent être constitués par une saillie aménagée sur la pièce d'assemblage et par une nervure aménagée sur la pièce d'actionnement, ou inversement, cette saillie bossage venant s'encliqueter derrière ladite nervure lorsque la pièce d'actionnement est amenée en position de verrouillage.

Avantageusement, la pièce de liaison comprend au moins une paire de bossages tels que précités, l'un des bossages de cette paire agissant sur le mouvement de l'une des branches et l'autre bossage de cette paire agissant sur le mouvement de l'autre branche.

Un mouvement parfaitement fiable desdites branches est ainsi obtenu.

De préférence, la pièce de liaison comprend deux paires de bossages tels que précités, dont une est aménagée sur la pièce d'assemblage et l'autre est aménagée sur la pièce d'actionnement, en des emplacements distants.

Un parfait actionnement des branches de la pièce d'assemblage est ainsi obtenu.

Selon une forme de réalisation préférée de l'invention, la pièce d'assemblage comprend une patte centrale de liaison audit sous-ensemble, qui traverse une ouverture aménagée dans un fond de la pièce d'actionnement.

Ladite patte centrale de liaison peut comprendre une partie de base et une aile pivotante reliée à la partie de base, l'une comprenant un plot à tête épaulée et l'autre comprenant un trou de réception de ce plot par encliquetage, cette partie de base et cette aile pouvant recevoir en elles et retenir, lorsque ladite tête est encliquetée dans ledit trou, le bord d'une pièce de matériau souple, notamment d'un panneau formant une paroi latérale d'une tente. Ladite aile peut notamment être reliée à ladite partie de base par une charnière-film.

L'invention sera bien comprise, et d'autres caractéristiques et avantages de celle-ci apparaîtront, en référence au dessin schématique annexé, représentant, à titre d'exemple non limitatif, une forme de réalisation préférée de la pièce de liaison qu'elle concerne.
Les figures 1 et 2 sont des vues en perspective, sous deux angles différents, d'une pièce d'actionnement que comprend la pièce de liaison ;
les figures 3 et 4 sont des vues en perspective, sous deux angles différents, d'une pièce d'assemblage que comprend la pièce de liaison ;
les figures 5 et 6 sont des vues de côté de la pièce d'actionnement et de la pièce d'assemblage, respectivement ;
la figure 7 est une vue de côté de la pièce de liaison, la pièce d'assemblage étant engagée dans la pièce d'actionnement ;
les figures 8 et 9 sont des vues en perspective, sous deux angles différents, de la pièce de liaison, et
les figures 10 et 11 sont des vues en perspective, sous deux angles différents, de la pièce de liaison, dans deux positions différentes, un bourrelet de bordure étant engagé entre des branches que comprend la pièce d'assemblage.

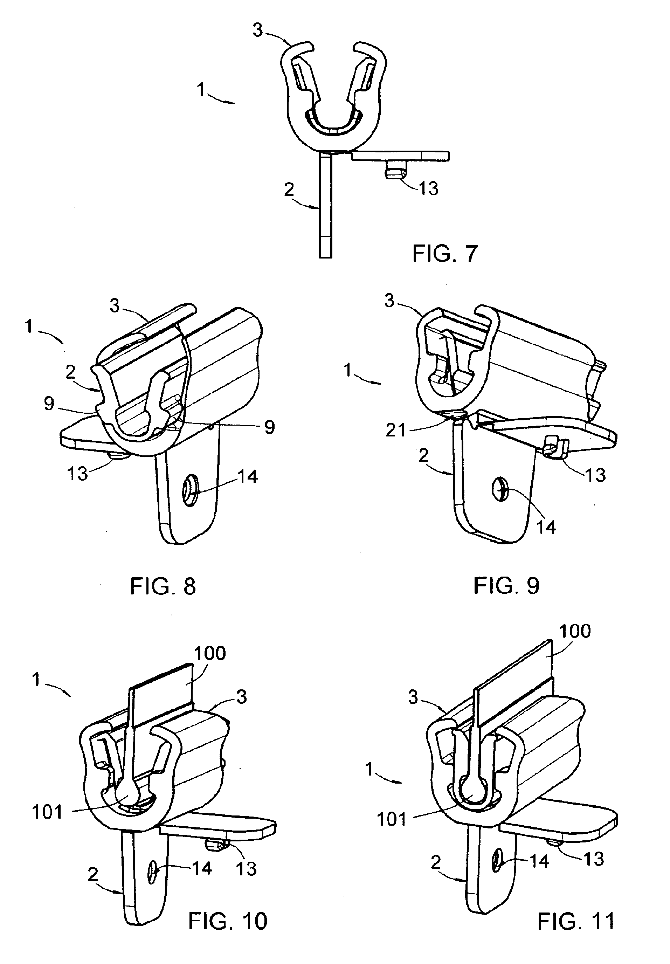

Les figures 7 à 11 représentent une pièce de liaison 1 permettant la liaison d'un panneau souple (non représenté), à laquelle elle est reliée, à un panneau souple 100 comprenant un bourrelet de bordure 101, visible en partie sur les figures 10 et 11. Le panneau souple auquel est reliée la pièce 1 peut notamment être un panneau destiné à constituer la paroi latérale d'une tente, et le panneau souple 100 est, dans ce cas, un panneau de jonction solidaire de la zone inférieure du toit de la tente, le bourrelet 101 étant solidaire du bord longitudinal libre de ce panneau 100.

La pièce de liaison 1 comprend une pièce d'assemblage 2 et une pièce d'actionnement 3, la pièce d'actionnement 3 étant reliée à la pièce d'assemblage 2 et étant mobile par rapport à cette pièce 2.

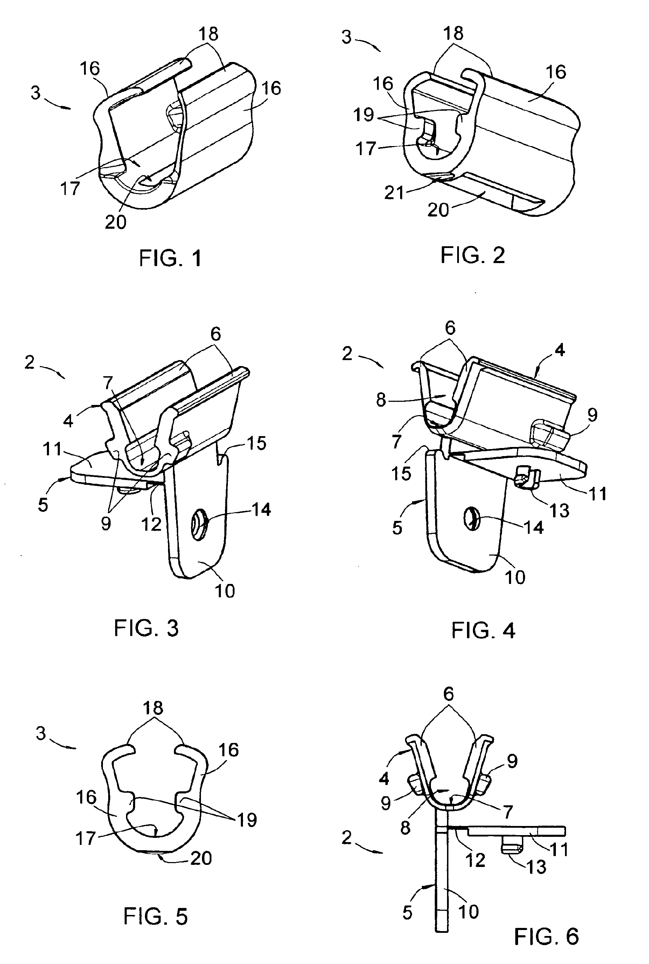

Ainsi que cela apparaît plus particulièrement en référence aux figures 3, 4 et 6, la pièce d'assemblage 2 comprend une partie 4 en forme de U et une patte centrale 5, solidaire de la zone centrale de la partie 4, l'ensemble étant moulé en une pièce.

Le partie 4 comprend deux branches 6 et une zone intermédiaire 7 arrondie et amincie, cette zone 7 étant déformable élastiquement afin de permettre une mobilité des deux branches 6 entre une position d'éloignement montrée sur les figures 3, 4, et 6 à 10 et une position de rapprochement montrée sur la figure 11.

Les branches 6 plus épaisses et la zone 7 amincie délimitent entre elles un logement 8 dans lequel peut être engagé le bourrelet 101 lorsque les branches 6 sont en position d'éloignement (cf. figure 10), et dans lequel se bourrelet 101 peut être retenu lorsque les branches 6 sont en position de rapprochement (cf. figure 11).

Les branches 6 présentent également, au niveau de leurs extrémités libres, des rebords arrondis et légèrement recourbés vers l'extérieur, et comprennent deux bossages saillants 9 en forme de rampe disposés à une extrémité longitudinale de ladite partie 4.

La patte centrale 5 comprend une partie de base 10 solidaire de la partie 4 et une aile pivotante 11 reliée à la partie de base 10 par une charnière film 12. L'aile pivotante 11 comprend un plot à tête épaulée 13 et la partie de base 10 comprend un trou de réception 14 du plot 13 par encliquetage. Cette patte centrale 5 est destinée à permettre la liaison de la pièce 1 avec le panneau souple auquel cette pièce est reliée, un bord de ce panneau souple, dans lequel est aménagé un trou, étant engagé entre la partie de base 10 et l'aile pivotante 11, puis l'aile 11 étant repliée pour engager le plot 13 dans le trou 14.

La partie de base 10 comprend en outre une saillie latérale 15 destinée à coopérer avec une nervure 21 de la pièce 3, comme cela sera décrit plus loin.

En référence plus particulièrement aux figures 1, 2 et 5, la pièce d'actionnement 3 a une forme générale en U et comprend deux parois latérales 16 et un fond 17 de forme arrondie. Les parois latérales 16 comprennent au niveau de leurs extrémités libres deux rebords 18 recourbés vers l'intérieur. Ces parois 16 comprennent également deux bossages saillants 19 disposés à une extrémité longitudinale de la pièce d'actionnement 3. Le fond 17 comprend une ouverture médiane longitudinale 20, dont la longueur est supérieure à la largeur de la patte centrale 5, et une nervure 21 aménagée à proximité de l'une de ses extrémités longitudinales.

Comme cela se comprend en référence aux figures 1 à 6, d'une part, et 7 à 9, d'autre part, la patte centrale 5 est destinée à être engagée au travers de l'ouverture 20, jusqu'à une position de montage dans laquelle les rebords libres des branches 6 sont encliquetés derrière les rebords 18 des parois 16, le fond 7 de la pièce 2 se trouve à proximité du fond 17 de la pièce 3, et les bossages 9 sont à côté des parois 16 tandis que les bossages 19 sont à côté des parois 6.

Dans cette position de montage, dite également "de déverrouillage", les branches 6 sont en position d'éloignement et peuvent être engagées sur le bourrelet 101, comme indiqué précédemment.

À partir de cette position de déverrouillage, la pièce 3 peut être déplacée en coulissement longitudinal par rapport à la pièce 2, amenant les bossages 9 et 19 à venir porter, respectivement, contre les parois 16 et 6. Ce déplacement est réalisé par l'exercice de pressions antagonistes sur l'extrémité longitudinale de la partie 4 qui dépasse de la pièce 3, d'une part, et sur l'extrémité longitudinale opposée de cette pièce 3, ces pressions étant réalisées notamment au moyen du pouce et de l'index d'une même main.

La pièce 3 peut être déplacée jusqu'à une position de verrouillage, dans laquelle les branches 6 sont en position de rapprochement et retiennent le bourrelet 101 entre elles, comme indiqué précédemment.

Au cours de ce déplacement, la saillie 15 vient franchir la nervure 21, par légère déformation élastique des pièces 2 et 3, cette saillie 15 et cette nervure 21 constituant ainsi des moyens de maintien des pièces 2 et 3 dans ladite position de verrouillage.

Dans une application précitée à une tente ou similaire, la pièce de liaison 1 permet de faciliter de manière déterminante le montage ou le démontage de la tente : en effet, les bourrelets de bordure que comprennent les bords latéraux (verticaux) d'un panneau de paroi reliée à une série de pièces 1 peuvent être engagés dans les gorges de poteaux profilés, par le bas de ces poteaux, puis le bord supérieur de ce panneau de bordure, qui comporte les pièces 1, peut être relié au panneau de jonction 100 par engagement et verrouillage des pièces 1 sur le bourrelet de bordure 101.

L'invention fournit ainsi une pièce de liaison pratique d'utilisation, n'obligeant pas à engager l'ensemble du bord supérieur d'un panneau de paroi depuis l'extrémité d'un panneau de jonction, et assurant une parfaite liaison à un bourrelet de bordure.

Il va de soi que l'invention n'est pas limitée à la forme de réalisation décrite ci-dessus à titre d'exemple mais qu'elle s'étend à toutes les formes de réalisations couvertes par les revendications ci-annexées.

## Revendications

1. Pièce (1) de liaison d'un sous-ensemble, notamment d'un panneau souple, à un panneau souple (100) comprenant un bourrelet de bordure (101), **caractérisée en ce qu'**elle comprend :
- une pièce d'assemblage (2) comprenant une partie (4) déformable, propre, dans une position, à être engagée sur le bourrelet de bordure (101), et dans une autre position, à être refermée sur ce bourrelet de bordure (101) afin de retenir ce dernier en elle ;
- une pièce d'actionnement (3), reliée à la pièce d'assemblage (2) et mobile par rapport à celle-ci entre une position de déverrouillage, dans laquelle la pièce d'assemblage (2) est dans ladite première position, et une position de verrouillage, dans laquelle la pièce d'assemblage (2) est dans ladite deuxième position ;
- des moyens (9, 19) permettant de faire passer ladite pièce d'assemblage (2) de ladite première position à ladite deuxième position lors du déplacement de la pièce d'actionnement (3) de ladite position de déverrouillage à ladite position de verrouillage, et inversement ; et
- des moyens (15, 21) de maintien de la pièce d'actionnement (3) en position de verrouillage.

2. Pièce de liaison selon la revendication 1, **caractérisée en ce que** :
- la pièce d'assemblage (2) comprend une partie (4) en forme de U, qui inclut deux branches (6) mobiles entre une position d'écartement, dans laquelle le bourrelet de bordure (101) peut être engagé entre ces branches (6), ce qui correspond à ladite première position, et une position de rapprochement, dans laquelle ces branches (6) retiennent ledit bourrelet de bordure (101) entre elles, ce qui correspond à ladite deuxième position ;
- la pièce d'actionnement (3) est reliée à la pièce d'assemblage (2) et est mobile par rapport à celle-ci entre une position de déverrouillage, dans laquelle lesdites branches (6) sont en position d'écartement, et une position de verrouillage, dans laquelle ces branches (6) sont en position de rapprochement ;
- la pièce de liaison (1) comprend au moins un bossage (9, 19) en forme de rampe, solidaire de la pièce d'assemblage (2) ou de la pièce d'actionnement (3), venant, lors du déplacement de la pièce d'actionnement (3) par rapport à la pièce d'assemblage (2), coopérer avec l'autre pièce (2, 3) de manière à réaliser le mouvement desdites branches (6) entre la position d'écartement et la position de rapprochement.

3. Pièce de liaison selon la revendication 1 ou la revendication 2, **caractérisée en ce que** la pièce d'actionnement (3) est mobile par rapport à la pièce d'assemblage (2) selon une direction perpendiculaire à la direction d'engagement de la pièce d'assemblage (2) sur le bourrelet de bordure (101).

4. Pièce de liaison selon l'une des revendications 2 ou la revendication 3, **caractérisée en ce que** la pièce d'actionnement (3) présente une forme générale en U et comprend, au niveau des extrémités libres de ses parois latérales (16), des rebords (18) recourbés vers l'intérieur, cette pièce d'actionnement (3) recevant en elle la partie (4) de la pièce d'assemblage (2) formant lesdites branches (6) et retenant cette partie (4) en elle par encliquetage de ces branches (6) derrière lesdits rebords (18).

5. Pièce de liaison selon l'une des revendications 1 à 4, **caractérisée en ce que** lesdits moyens de maintien de la pièce d'actionnement (3) en position de verrouillage sont constitués par un saillie (15) aménagée sur la pièce d'assemblage (2) et par une nervure (21) aménagée sur la pièce d'actionnement (3), ou inversement, cette saillie (15) venant s'encliqueter derrière ladite nervure (21) lorsque la pièce d'actionnement (3) est amenée en position de verrouillage.

6. Pièce de liaison selon l'une des revendications 2 à 5, **caractérisée en ce qu'**elle comprend au moins une paire de bossages (9, 19) tels que précités, l'un des bossages de cette paire agissant sur le mouvement de l'une des branches (6) et l'autre bossage de cette paire agissant sur le mouvement de l'autre branche (6).

7. Pièce de liaison selon la revendication 6, **caractérisée en ce qu'**elle comprend deux paires de bossages (9, 19) tels que précités, dont une est aménagée sur la pièce d'assemblage (2) et l'autre est aménagée sur la pièce d'actionnement (3), en des emplacements distants.

8. Pièce de liaison selon l'une des revendications 1 à 6, **caractérisée en ce que** la pièce d'assemblage (2) comprend une patte centrale (5) de liaison audit sous-ensemble, qui traverse une ouverture (20) aménagée dans un fond de la pièce d'actionnement (3).

9. Pièce de liaison selon la revendication 8, **caractérisée en ce que** ladite patte centrale de liaison (5) comprend une partie de base (10) et une aile pivotante (11) reliée à la partie de base (10), l'une comprenant un plot (13) à tête épaulée et l'autre comprenant un trou (14) de réception de ce plot (13) avec encliquetage, la partie de base (10) et l'aile (11) pouvant recevoir en elles et retenir, lorsque ladite tête (13) est encliquetée dans ledit trou (14), le bord d'une pièce de matériau souple, notamment d'un panneau formant une paroi latérale d'une tente.

10. Pièce de liaison selon la revendication 9, **caractérisée en ce que** ladite aile (11) est reliée à ladite partie de base (10) par une chamière-film (12).

## Claims

1. Part (1) for connection of a sub-assembly, in particular a flexible panel, to a flexible panel (100) comprising an edge bead (101), **characterised in that** it comprises:
- an assembly part (2) comprising a deformable part (4), adapted - in one position - to being fitted on to the edge bead (101) and - in another position - to being closed again on this edge bead (101) so as to retain the latter in it;
- an operation part (3), connected to the assembly part (2) and movable with respect to the latter between an unlocked position, in which the assembly part (2) is in the said first position and a locked position, in which the assembly part (2) is in the said second position;
- means (9, 19) making it possible to move the said assembly part (2) from the said first position to the said second position at the time of displacement of the operation part (3) from the said unlocked position to the said locked position and vice versa; and
- means (15, 21) of holding the operation part (3) in the locked position.

2. Connection part according to claim 1, **characterised in that**:
- the assembly part (2) comprises a U-shaped portion (4), which includes two branches (6) which are movable between a splayed position, in which the edge bead (101) can be fitted between these branches (6) - which corresponds to the said first position - and a drawn-in position, in which these branches (6) hold the said edge bead (101) between them, which corresponds to the said second position;
- the operation part (3) is connected to the assembly part (2) and is movable with respect to the latter between an unlocked position - in which the said branches (6) are in a splayed position - and a locked position, in which these branches (6) are in a drawn-in position;
- the connection part (1) comprises at least one boss (9, 19) in the form of a ramp, secured to the assembly part (2) or the operation part (3), co-operating, at the time of displacement of the operation part (3) with respect to the assembly part (2), with the other part (2, 3) so as to effect the movement of the said branches (6) between the splayed position and the drawn-in position.

3. Connection part according to claim 1 or claim 2, **characterised in that** the operation part (3) is movable with respect to the assembly part (2) in a direction perpendicular to the direction of fitting of the assembly part (2) on to the edge bead (101).

4. Connection part according to either of claims 2 or 3, **characterised in that** the operation part (3) has a general U shape and comprises, at the free ends of its side walls (16), shoulders (18) curved inwards, this operation part (3) receiving in itself the portion (4) of the assembly part (2) forming the said branches (6) and holding this portion (4) in itself by the catching of these branches (6) behind the said shoulders (18).

5. Connection part according to any of claims 1 to 4, **characterised in that** the said means of holding the operation part (3) in the locked position are constituted by a projection (15) provided on the assembly part (2) and a rib (21) provided on the operation part (3) or vice versa, this projection (15) catching behind the said rib (21) when the operation part (3) is placed in the locked position.

6. Connection part according to any of claims 2 to 5, **characterised in that** it comprises at least one pair of bosses (9, 19) as mentioned above, one of the bosses of this pair acting on the movement of one of the branches (6) and the other boss of this pair acting on the movement of the other branch (6).

7. Connection part according to claim 6, **characterised in that** it comprises two pairs of bosses (9, 19) as mentioned above, one of which is provided on the assembly part (2) and the other one of which is provided on the operation part (3), at distant locations.

8. Connection part according to any of claims 1 to 6, **characterised in that** the assembly part (2) comprises a central leg (5) for connection to the said sub-assembly, which passes through an opening (20) provided in a base of the operation part (3).

9. Connection part according to claim 8, **characterised in that** the said central connection leg (5) comprises a base portion (10) and a pivoting wing (11) connected to the base portion (10), one comprising a stud (13) with shouldered head and the other comprising a hole (14) for receiving this stud (13) with catching, the base portion (10) and the wing (11) being capable of receiving in themselves and holding, when the said head (13) is caught in the said hole (14), the edge of a piece of flexible material, in particular a panel forming a side wall of a tent.

10. Connection part according to claim 9, **characterised in that** the said wing (11) is connected to the said base portion (10) by a film hinge (12).

## Patentansprüche

1. Teil (1) zum Verbinden einer Unterbaugruppe, insbesondere einer biegsamen Tafel, mit einer biegsamen Tafel (100), die einen Randwulst (101) aufweist, **dadurch gekennzeichnet, dass** er Folgendes aufweist:
- einen Zusammenfügeteil (2), der einen verformbaren Teil (4) aufweist, der in einer Position auf dem Randwulst (101) eingefügt werden kann, und in einer anderen Position auf diesem Randwulst (101) verschlossen werden kann, um diesen Letzteren in ihm zurückzuhalten;
- einen Betätigungsteil (3), der mit dem Zusammenfügeteil (2) verbunden und in Bezug zu diesem zwischen einer Entriegelungsposition, in der der Zusammenfügeteil (2) in der ersten Position ist, und einer Verriegelungsposition, in der der Zusammenfügeteil (2) in der zweiten Position ist, beweglich ist;
- Mittel (9, 19), die es erlauben, den Zusammenfügeteil (2) von der ersten zu der zweiten Position beim Bewegen des Betätigungsteils (3) von der Entriegelungsposition zu der Verriegelungsposition und umgekehrt übergehen zu lassen; und
- Mittel (15, 21), zum Halten des Betätigungsteils (3) in Verriegelungsposition.

2. Verbindungsteil nach Anspruch 1, **dadurch gekennzeichnet, dass**:
- der Zusammenfügeteil (2) einen Teil (4) in U-Form aufweist, der zwei Schenkel (6) umfasst, die zwischen einer Spreizposition, in der der Randwulst (101) zwischen diesen Schenkeln (6) eingeführt werden kann, was der ersten Position entspricht, und einer Annäherungsposition, in der diese Schenkel (6) den Randwulst (101) zwischen sich zurückhalten, was der zweiten Position entspricht, beweglich sind;
- der Betätigungsteil (3) mit dem Zusammenfügeteil (2) verbunden und in Bezug zu diesem zwischen einer Entriegelungsposition, in der die Schenkel (6) in Spreizposition sind, und einer Verriegelungsposition, in der diese Schenkel (6) in Annäherungsposition sind, beweglich ist;
- der Verbindungsteil (1) mindestens einen Höcker (9, 19) in Rampenform aufweist, der fest mit dem Zusammenfügeteil (2) oder dem Betätigungsteil (3) verbunden ist und beim Bewegen des Betätigungsteils (3) in Bezug zu dem Zusammenfügeteil (2) mit dem anderen Teil (2, 3) derart zusammenwirkt, dass die Bewegung der Schenkel (6) zwischen der Spreizposition und der Annäherungsposition ausgeführt wird.

3. Verbindungsteil nach Anspruch 1 oder Anspruch 2, **dadurch gekennzeichnet, dass** der Betätigungsteil (3) in Bezug zu dem Zusammenfügeteil (2) gemäß einer Richtung senkrecht zu der Einführrichtung des Zusammenfügeteils (2) auf dem Randwulst (101) beweglich ist.

4. Verbindungsteil nach einem der Ansprüche 2 oder 3, **dadurch gekennzeichnet, dass** der Betätigungsteil (3) eine allgemeine U-Form darstellt und auf dem Niveau der freien Enden seiner Seitenwände (16) Ränder (18), die nach innen zurückgebogen sind, aufweist, wobei dieser Betätigungsteil (3) in sich den Teil (4) des Zusammenfügeteils (2) aufnimmt, der die Schenkel (6) bildet, und diesen Teil (4) in sich durch Einrasten dieser Schenkel (6) hinter den Rändern (18) zurückhält.

5. Verbindungsteil nach einem der Ansprüche 1 bis 4, **dadurch gekennzeichnet, dass** die Mittel zum Halten des Betätigungsteils (3) in Verriegelungsposition aus einem Vorsprung (15) bestehen, der auf dem Zusammenfügeteil (2) eingerichtet ist, und aus einer Rippe (21), die auf dem Betätigungsteil (3) eingerichtet ist oder umgekehrt, wobei dieser Vorsprung (15) hinter der Rippe (21) einrastet, wenn der Betätigungsteil (3) in Verriegelungsposition gebracht wird.

6. Verbindungsteil nach einem der Ansprüche 2 bis 5, **dadurch gekennzeichnet, dass** er mindestens ein Paar Höcker (9, 19) wie oben genannt aufweist, wobei einer dieser Höcker dieses Paars auf die Bewegung eines der Schenkel (6) einwirkt und der andere Höcker dieses Paars auf die Bewegung des anderen Schenkels (6) einwirkt.

7. Verbindungsteil nach Anspruch 6, **dadurch gekennzeichnet, dass** er zwei Paare Höcker (9, 19) wie oben erwähnt aufweist, von welchen einer auf dem Zusammenfügeteil (2) und der andere auf dem Betätigungsteil (3) an beabstandeten Stellen eingerichtet ist.

8. Verbindungsteil nach einem der Ansprüche 1 bis 6, **dadurch gekennzeichnet, dass** der Zusammenfügeteil (2) eine zentrale Pratze (5) zum Verbinden mit der Unterbaugruppe aufweist, die eine Öffnung (20), die in dem Boden des Betätigungsteils (3) eingerichtet ist, durchquert.

9. Verbindungsteil nach Anspruch 8, **dadurch gekennzeichnet, dass** die zentrale Verbindungspratze (5) einen Basisteil (10) und einen schwenkenden Flügel (11), der mit dem Basisteil (10) verbunden ist, aufweist, wobei der eine einen Klotz (13) mit Ansatzkopf aufweist und der andere eine Bohrung (14) zum Aufnehmen dieses Klotzes (13) mit Einrasten, wobei der Basisteil (10) und der Flügel (11) in sich den Rand eines Teils aus biegsamem Material, insbesondere eine Tafel, die eine Seitenwand eines Zeltes bildet, aufnehmen und zurückhalten können, wenn der Kopf (13) in der Bohrung (14) einrastet ist.

10. Verbindungsteil nach Anspruch 9, **dadurch gekennzeichnet, dass** der Flügel (11) mit dem Basisteil (10) durch ein Folienscharnier (12) verbunden ist.
